**Europäisches Patentamt**

**European Patent Office**

**Office européen des brevets**

(19)

(11) Veröffentlichungsnummer: **0 109 570**
**B1**

(12) **EUROPÄISCHE PATENTSCHRIFT**

(45) Veröffentlichungstag der Patentschrift:
01.07.87

(51) Int. Cl.⁴: **G 01 F 25/00**

(21) Anmeldenummer: **83110529.1**

(22) Anmeldetag: 22.10.83

(54) Prüfeinrichtung für Durchflussmesser.

(30) Priorität: **23.10.82 DE 3239281**

(43) Veröffentlichungstag der Anmeldung:
**30.05.84 Patentblatt 84/22**

(45) Bekanntmachung des Hinweises auf die Patenterteilung:
**01.07.87 Patentblatt 87/27**

(84) Benannte Vertragsstaaten:
**AT FR GB IT NL**

(56) Entgegenhaltungen:
**EP-A-0 028 568**
**DE-B-1 249 547**
**GB-A-2 023 295**
**US-A-3 273 375**
**US-A-3 492 856**
**US-A-4 372 147**

(73) Patentinhaber: **BOPP & REUTHER GMBH, Carl-Reuther- Strasse 1, D-6800 Mannheim 31 (DE)**

(72) Erfinder: **Böhm, Jürgen, Dr.- Ing., Krautheimer Strasse 11, D-6800 Mannheim- Wallstadt (DE)**

EP 0 109 570 B1

## Beschreibung

Die Erfindung bezieht sich auf eine Prüfeinrichtung für einen fest in eine Rohrleitung eingebauten Durchflußmesser, insbesondere für höhere Mediendrücke, bei der ein in einer Bypassleitung der Rohrleitung eingebauter und durch eine Ventilanordnung wahlweise in die Rohrleitung in Reihe mit dem Durchflußmesser einschaltbarer zylindrischer Eichbehälter am Beging und am Ende einer Meßstrecke einen Start- bzw. Stoppschalter trägt, durch die beim Vorbeibewegen eines in dem Eichbehälter gleitenden und von der zu messenden Flüssigkeit verdrängten Meßkolbens die Aufaddierung von elektrischen Impulsen des Durchflußmessers gestartet und wieder gestoppt wird, wobei die aufaddierten Impulse mit dem Eichvolumen der Meßstrecke in Beziehung gesetzt werden.

Die DE-A-12 49 547 beschreibt eine Prüfeinrichtung gemäß der obergenannten Art. Bei dieser bekannten Prüfeinrichtung besteht die Ventileinrichtung zum Umleiten der in der Rohrleitung strömenden Flüssigkeit in den in der Bypassleitung eingebauten Eichbehälter aus mehreren vor und hinter dem Eichbehälter in der Bypassleitung und aus mehreren in der Rohrleitung eingebauten Absperr- bzw. Umschaltventilen, wodurch die Prüfeinrichtung konstruktiv sehr aufwendig wird und für das Umschalten des Mediumflusses auf den Eichbehälter relativ viel Zeit erforderlich ist. Die Meßstrecke befindet sich bei dem einen Ausführungsbeispiel in einem langen liegenden Meßrohr, in dem ein von der zu messenden Flüssigkeit aus der einen Endlage in die andere Endlage verdrängter Meßkolben gleitet, der beim Vorbeibewegen den Startschalter und den Stoppschalter betätigt. Bei dem anderen Ausführungsbeispiel wird die Meßstrecke durch einen stehenden Eichbehälter gebildet, bei dem eine Startsonde und eine Stoppsonde auf den aufsteigenden Flüssigkeitsspiegel im Eichbehälter anspricht. Diese bekannten Prüfeinrichtungen eignen sich auch nicht für höhere Mediumdrücke, da sich die Eichbehälterwand bei höherem Druck elastisch aufweiten kann, wodurch das Eichvolumen der Meßstrecke ungewollt vergrößert wird und dadurch Meßfehler in Kauf genommen werden müssen.

Aus der US-A-3 273 375 ist zwar eine Prüfeinrichtung für Durchflußmesser bekannt, bei der sich die Meßstrecke in einem langen liegenden Meßrohr befindet, das von einem Außenrohr umgeben ist, so daß in dem den Meßkolben aufnehmenden Meßrohr infolge des Druckausgleiches nicht die Gefahr eines Aufweitens besteht. Der Ringraum zwischen dem Meßrohr und dem Außenrohr ist hier jedoch als Zuführungs- und Abführungskammer für die Meßflüssigkeit ausgebildet und direkt in die Rohrleitung eingebaut, so daß dieser Ringraum und der Meßzylinder ständig von der in der Rohrleitung strömenden Flüssigkeit durchflossen werden. Da die Prüfeinrichtung hier nicht in einer Bypassleitung der Rohrleitung eingebaut ist sondern direkt in der Rohrleitung sitzt, läßt sich die Prüfeinrichtung nicht während der langen Prüfpausen abschalten. Infolge der zahlreichen Umlenkungen tritt beim ständigen Durchströmen der Prüfeinrichtung außerdem ein erheblicher Druckverlust auf und beim Umsteuern der Strömungsrichtung im Meßrohr über den hierfür vorgesehenen Drehschieber lassen sich Druckstöße nicht vermeiden.

Aufgabe der Erfindung ist es, die in eine Bypassleitung der Rohrleitung eingebaute Prüfeinrichtung so auszubilden, daß das Umschalten des zu messenden Flüssigkeitsstromes von der Rohrleitung auf die Bypassleitung und umgekehrt mit den geringsten baulichen Mitteln schnell und sicher erfolgt und mit der Prüfeinrichtung bei einfachstem Aufbau eine hohe Meßgenauigkeit erzielt wird und daß auch bei höheren Mediendrücken Meßfehlern vermieden werden.

Die Lösung dieser Aufgabe wird in den kennzeichnenden Merkmalen den Anspruchs 1 gesehen.

Dadurch, daß die Ventileinrichtung nur aus einem einzigen Absperrventil besteht, das in die Rohrleitung zwischen den beiden Anschlüssen der Bypassleitung eingebaut ist, kann das für den Prüfvorgang erforderliche Umschalten des zu messenden Flüssigkeitsstromes von der Rohrleitung auf den in der Bypassleitung eingebauten Eichbehälter mit baulich geringsten Mitteln und in kürzester Zeit allein durch Betätigen dieses einen Ventils erfolgen. Durch die senkrechte Anordnung des Eichbehälters und des im Meßzylindermantel gleitenden Meßkolbens kann der Flüssigkeitsstrom beim Öffnen des Ventils wieder ausschließlich durch die Rohrleitung fließen, da der im Meßzylindermantel des Eichbehälters gleitende Meßkolben dann durch sein Eigengewicht und/oder durch die Differenzdruckeinrichtung selbsttätig in seine Ausgangsstellung zurückkehrt und dabei die Bypassleitung selbsttätig versperrt. Da der die Meßstrecke bildende senkrechte Meßzylindermantel von einem Druckausgleichsraum umschlossen ist, ist der Meßzylindermantel im Eichbehälter druckentlastet, so daß auch bei hohen Leitungsdrücken eine Aufweitung des Meßzylindermantels und damit eine Vergrößerung des Meßvolumens vermieden und eine klemmfreie leichte Rückführung des Meßkolbens in die Ausgangsstellung allein durch das Eigengewicht des Meßkolbens oder mit Unterstützung durch eine Differenzdruckeinrichtung erzielt wird.

Ein besonders zweckmäßiger Einbau des Meßzylindermantels in den Eichbehälter ergibt sich durch die Merkmale des Anspruchs 2, wobei die Abdichtung des Eintrittsendes des Meßzylindermantels zum Ausgleichsdruckraum des Eichbehälters hin gewährleistet, daß die gesamte in die Bypassleitung einströmende Flüssigkeitsmenge auch durch den Meßzylindermantel gelangt und damit im Bereich der Meßstrecke im verdrängenden Sinne auf den Meßkolben einwirkt. In Verbindung mit der offenen Einmündung des Austrittsendes des Meßzylindermantels in den Druckausgleichsraum des Eichbehälters, von dem der Austrittsabschnitt der Bypassleitung abzweigt, wird in einfacher Weise der Druckausgleich des Meßzylindermantels ermöglicht und der Flüssigkeitsstrom kann den Eichbehälter und die Bypassleitung auf kürzestem Wege und damit strömungsgünstig passieren.

Der Meßzylindermantel, der in an sich bekannter Weise eine zwischen dem Start- und Stoppschalter liegende Meßstrecke sowie eine Anlaufstrecke und eine Nachlaufstrecke aufweist, besitzt entsprechend dem Merkmal des Anspruchs 3 im Bereich der Nachlaufstrecke Mantelöffnungen, durch die die vom Meßkolben verdrängte, den Meßzylindermantel durchströmende Flüssigkeit direkt seitlich in den Druckausgleichsraum und von hier in die Bypassleitung abströmen kann, so daß ein ausreichend hoher Flüssigkeitsdurchsatz gewährleistet ist.

Der Meßzylindermantel ist entsprechend dem Anspruch 4 am Austrittsende mit einem nach innen vorspringenden Hubbegrenzungsrand versehen, wodurch in einfacher Weise ein Anschlag für den Meßkolben gebildet wird.

Trägt der Behälterdeckel nach dem Merkmal des Anspruchs 5 eine Dämpfungsfeder für den Meßkolben, so wird die Bewegung des Meßkolbens kurz vor dem Auftreffen auf den Hubbegrenzungsrand wirksam gebremst.

Eine sichere selbsttätige Rückführung des Meßkolbens in die Ausgangsstellung wird entsprechenddem Merkmal des Anspruchs 6 durch eine venturirohrartige Verengung der Rohrleitung erreicht, die im Anschlußbereich des Eintrittsabschnittes der Bypassleitung vorgesehen ist. Dadurch wird zwischen dem Eintrittsabschnitt und dem Austrittsabschnitt der Bypassleitung eine geringe Druckdifferenz erzeugt, die bei geöffnetem Absperrventil ausreicht, um einen für die Rückführung des Meßkolbens in die Ausgangsstellung erforderlichen Rückstrom in der Bypassleitung zu erzeugen.

Ist die Länge der Anlaufstrecke des Meßzylinder mantels entsprechend Anspruch 7 auf die Schließzeit des Absperrventils abgestimmt, so ist gewährleistet, daß der Startschalter erst dann vom Meßkolben überfahren wird, wenn der direkte Durchgang durch die Rohrleitung absolut gesperrt ist. Die Anlaufstecke des Meßzylinders läßt sich dadurch verkürzen, daß das Absperrventil entsprechend dem Anspruch 8 als Schnellschlußventil ausgebildet ist.

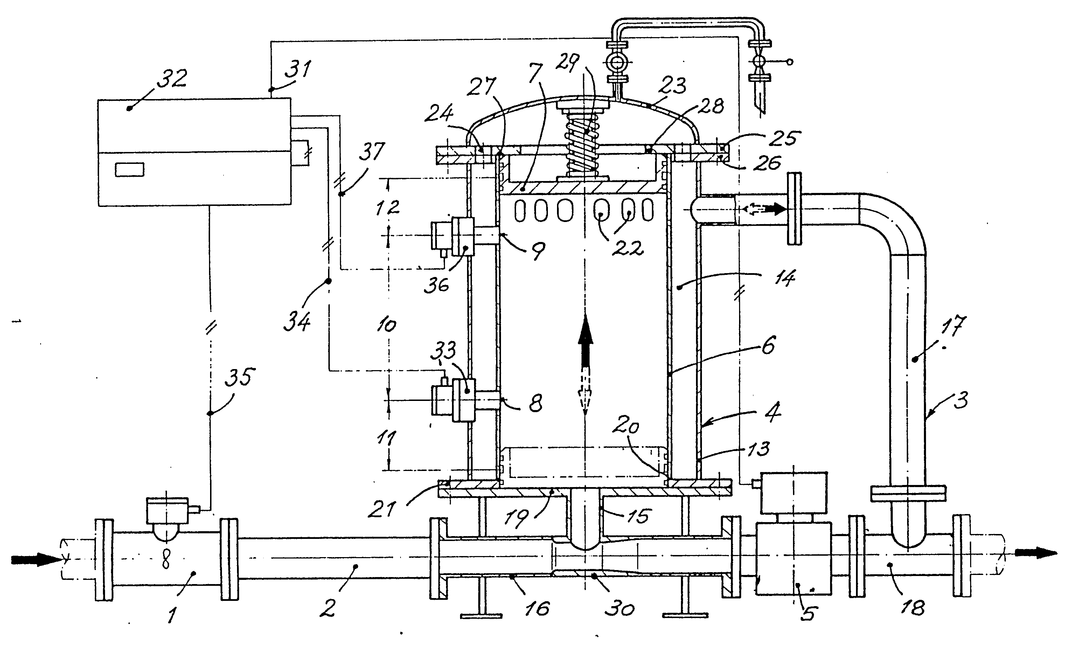

Die Erfindung wird anhand eines Ausführungsbeispieles in der Zeichnung näher erläutert.

Der zu prüfende Durchflußmesser 1 ist fest in die vom zu messenden Medium durchströmte Rohrleitung 2 eingebaut. Die Prüfeinrichtung für den Durchflußmesser 1 besteht aus einem in einer Bypassleitung 3 der Rohrleitung 2 senkrecht eingebauten zylindrischen Eichbehälter 4, der nach Schließen des Absperrventils 5 von der in der Rohrleitung 2 strömenden Flüssigkeit von unten nach oben durchflossen wird und dadurch mit dem Durchflußmesser 1 in Reihe schaltbar ist. Der Eichbehälter 4 trägt in seinem Innern einen Meßzylindermantel 6, in dem der Meßkolben 7 gleitet. Der Meßzylindermantel 6 enthält die zwischen der Startstellung 8 und der Stoppstellung gliegende Meßstrecke 10 mit dem zu verdrängenden Eichvolumen. Im Meßzylindermantel 6 ist der Meßstrecke 10 die Anlaufstrecke 11 vorgeschaltet, und hinter der Meßstrecke 10 ist die Nachlaufstrecke 12 für den Meßkolben 7 vorgesehen. Zwischen dem Mantel 13 des Eichbehälters 4 und dem Meßzylindermantel 6 befindet sich der Druckausgleichsraum 14.

Für den Anschluß der Bypassleitung 3 an die Rohrleitung 2 ist der Eintrittsabschnitt 15 der Bypassleitung mit einem mit Flanschen versehenen Rohrabschnitt 16 verbunden, und der Austrittsabschnitt 17 der Bypassleitung 3 ist an das Abzweigrohrstück 18 angeflanscht. Das Absperrventil 5 ist mit seinen Flanschen zwischen dem Rohrabschnitt 16 und dem Abzweigrohrstück 18 eingespannt, so daß sich für die Prüfeinrichtung eine aus den drei hintereinandergeschalteten Rohrstücken 16, 5 und 18 gebildete Anschlußstrecke zum Einbau in die Rohrleitung 2 ergibt. Der Eintrittsabschnitt 15 der Bypassleitung 3 sitzt fest an dem Boden 19 des Eichbehälters 4 und mündet frei von unten in den Meßzylindermantel 6, dessen unterer Rand an der Verbindungsstelle 20 mit dem Bodenflansch 21 des Behältermantels 13 dicht verbunden ist. Oben im Bereich der Nachlaufstrecke 12 trägt der Meßzylindermantel 6 auf dem Umfang verteilte Mantelöffnungen 22, über die die vom Meßkolben 7 verdrängte Flüssigkeit seitlich in den Druckausgleichsraum 14 und von dort über den an den Druckausgleichsraum 14 angeschlossenen Austrittsabschnitt 17 der Bypassleitung 3 abströmen kann. Die Flüssigkeittritt außerdem auch nach oben aus dem Meßzylindermantel 6 aus, wobei sie am gewölbten Behälterdeckel 23 nach unten umgelenkt wird und über die Öffnungen 24 im Deckelflansch 25 und im oberen Behälterflansch 26 in den Druckausgleichsraum 14 und weiter in den Austrittsabschnitt 17 der Bypassleitung 3 fließt.

Der Meßzylindermantel 6 wird oben an der Verbindungsstelle 27 vom oberen Behälterflansch 26 und unten an der Verbindungsstelle 20 vom unteren Behälterflansch 21 konzentrisch gehalten, wobei an den Verbindungsstellen 20 und 27 zwischen dem Meßzylindermantel 6 und den beiden Behälterflanschen 21 und 26 ein elastisches Zwischenglied eingesetzt sein kann, damit eine mögliche Aufweitung des Eichbehälters 4 nicht auf den Meßzylindermantel 6 übertragen wird. Der Deckelflansch 25 des Behälterdeckels 23 übergreift den Meßzylindermantel 6 nach innen, wodurch ein Hubbegrenzungsrand 28 für den Meßkolben 7 gebildet wird. Damit ein weiches aufsetzen des Meßkolbens 7 auf den Hubbegrenzungsrand 28 gewährleistet ist, ist im Behälterdeckel 23 noch eine Dämpfungsfeder 29 eingebaut. Der in die Rohrleitung 2 eingesetzte Rohrabschnitt 16 ist im Bereich der Abzweigstelle des Eintrittsabschnittes 15 der Bypassleitung mit einer venturirohrartigen Verengung 30 versehen, die die Differenzdruckeinrichtung für die Rückführung des Meßkolbens 7 in die Ausgangsstellung bildet.

Die Wirkungsweise der Prüfvorrichtung ist folgende: Vor Beginn des Prüfvorganges ist das Absperrventil 5 geöffnet, so daß die Flüssigkeit geradlinig durch die Rohrleitung 2 strömt. Der Meßkolben 7 befindet sich noch in der srichpunktiert gezeichneten unteren Ausgangsstellung, die er durch sein Eigengewicht und durch die in der Bypassleitung 3 auftretende Rückströmung infolge der an der Verengung 30 erzeugten Druckdifferenz selbsttätig eingenommen hat. Der Meßkolben 7 sperrt hierbei den Durchfluß durch die Bypassleitung 3 ab. Für den Prüfvorgang wird der Schließvorgäng des Absperrventils 5 über die Steuerleitung 31 vom Auswerter 32 aus eingeleitet, so daß bei Erreichen der Ventilschließstellung die gesamte den Durchflußmesser 8 passierende Flüssigkeit durch die Bypassleitung 3 und durch den Eichbehälter 4 strömt. Die Flüssigkeittritt über den Eintrittsabschnitt 15 in den Meßzylindermantel 6 ein und verdrängt den Meßkolben 7 im Bereich der Anlaufstrecke 11 nach oben bis zur Startstellung 8. Innerhalb dieser Anlaufstrecke 11 muß das Absperrventil 5 bis in die Schließendstellung gefahren sein. Beim Überfahren der Startstellung 8 spricht der Startschalter 33 an und über die Steuerleitung 34 wird die Aufaddierung der über die Impulsleitung 35 vom Durchflußmesser 8 kommenden Durchflußimpulse im Auswerter 32 ausgelöst.

Nach Durchfahren der Meßstrecke 10, d. h. nach Verdrängen des Behältereichvolumens erreicht der Meßkolben 7 die Stoppstellung 9, in der der Stoppschalter 36 über die Steuerleitung 37 die Aufaddierung der vom Durchflußmesser 8 kommenden Durchflußimpulse im Auswerter 32 wieder unterbricht. Gleichzeitig wird das Öffnen des Absperrventils 5 über die Steuerleitung 31 selbsttätig vom Auswerter 32 eingeleitet. Während des Ventilöffnungsvorganges wird der Meßkolben 7 noch über den Bereich der Nachlaufstrecke 12 weiter nach oben verdrängt, wobei die Kolbenbewegung beim Überfahren der Mantelöffnungen 22 des Meßzylindermantels 6 wegen der kleineren Abströmquerschnitte der Deckelöffnungen 24 gedämpft wird. Vor Auftreffen auf den Hubbegrenzungsrand 28 wird der Meßkolben 7 durch die Dämpfungsfeder 29 weich abgebremst.

Im Auswerter 32 wird die sich aus den aufaddierten Durchflußimpulsen des zu prüfenden Durchflußmessers 8 ergebende Flüssigkeitsmenge mit dem verdrängten Eichvolumen der Meßstrecke 10 verglichen und der Meßfehler angezeigt. Bei vollständig geöffnetem Absperrventil 5 erfolgt der Durchfluß wieder geradlinig durch die Einbaustrecke 16, 5 und 18 der Rohrleitung 2 und der Meßkolben 7 wandert durch sein Eigengewicht langsam wiederin die untere Ausgangsstellung, wobei die venturirohrartige Verengung 30 infolge der Druckdifferenz einen Rückstrom in der Bypassleitung 3 auslöst, der die Rückstellbewegung des Meßkolbens 7 erheblich unterstützt. Das Absperrventil 5 ist als Schnellschlußventil ausgebildet, damit die Länge der Anlaufstrecke 11 und der Auslaufstrecke 12 möglichst kurz gehalten werden kann.

**Patentansprüche**

1. Prüfeinrichtung für einen fest in eine Rohrleitung (2) eingebauten Durchflußmesser (1), insbesondere für höhere Mediendrücke, bei der ein in einer Bypassleitung (3) der Rohrleitung eingebauter und durch eine Ventilanordnung (5) wahlweise in die Rohrleitung (2) in Reihe mit dem Durchflußmesser (1) einschaltbarer zylindrischer Eichbehälter (4) am Beginn und am Ende einer Meßstrecke (10) einen Start- bzw. Stoppschalter (33, 36) trägt, durch die beim Vorbeibewegen eines in dem Eichbehälter (4) gleitenden und von der zu messenden Flüssigkeit verdrängten Meßkolbens (7) die Aufaddierung von elektrischen Impulsen des Durchflußmessers (1) gestartet und wieder gestoppt wird, wobei die aufaddierten Impulse mit dem Eichvolumen der Meßstrecke (10) in Beziehung gesetzt werden, dadurch gekennzeichnet, daß

a) die Ventileinrichtung nur aus einem zwischen zwei Anschlüssen (16, 18) der Bypassleitung (3) in die Rohrleitung (2) eingebauten Absperrventil (5) besteht,

b) der Eichbehälter (4) in seinem Inneren einen die Meßstrecke (10) bildenden sowie einen äußeren Druckausgleichsraum (14) begrenzenden Meßzylindermantel (6) mit Start- und Stoppschalter (33, 36) und hierin gleitendem Meßkolben (7) trägt,

c) der Eichbehälter (4) und der Meßzylindermantel (6) senkrecht und mit untenliegendern Eintrittssende (20) in die Bypassleitung (3) eingebaut sind, und

d) die Rückführung des Meßkolbens (7) in die Ausgangsstellung bei geöffnetem Absperrventil (5) durch das Eigengewicht des Meßkolbens und/oder durch eine Differenzdruckeinrichtung (30) selbsttätig erfolgt.

2. Prüfeinrichtung nach Anspruch 1, dadurch gekennzeichnet, daß der Meßzylindermantel (6) an seinem Eintrittsende (20) und Austrittsende (27) konzentrisch im Eichbehälter (4) gehalten und an dem Eintrittsende zum Ausgleichsdruckraum (14) hin abgedichtet ist, während der Meßkammermantel (6) in Bereich seines Austrittsendes offen in den Druckausgleichsraum (14) mündet, von dem der Austrittsabschnitt (17) der Bypassleitung (3) abzweigt.

3. Prüfeinrichtung nach den Ansprüchen 1 und 2, dadurch gekennzeichnet, daß sich der Meßzylindermantel aus einer zwischen Start- und Stoppschalter liegenden Meßstrecke sowie einer Anlaufstrecke und einer Nachlaufstrecke zusammensetzt und daß der Meßzylindermantel (6) im Bereich der Nachlaufstrecke (12) Mantelöffnungen (22) aufweist.

4. Prüfeinrichtung nach einem oder mehreren der Ansprüche 1 bis 3, dadurch gekennzeichnet, daß das Austrittsende (27) des Meßzylindermantels (6) mit einem nach innen vorspringenden Hubbegrenzungsrand (28) versehen ist.

5. Prüfeinrichtung nach einem oder mehreren der Ansprüche 1 bis 4, dadurch gekennzeichnet, daß der Eichbehälterdeckel (23) eine Dämpfungsfeder (29) für den Meßkolben (7) trägt.

6. Prüfeinrichtung nach einem oder mehreren der Ansprüche 1 bis 5, dadurch gekennzeichnet, daß die Rohrleitung (2) im Anschlußbereich (16) des Eintrittsabschnittes (15) der Bypassleitung (3) mit einer die Differenzdruckeinrichtung bildenden venturirohrartigen Verengung (30) versehen ist.

7. Prüfeinrichtung nach einem oder mehreren der Ansprüche 1 bis 6, dadurch gekennzeichnet, daß die Länge der Anlaufstrecke (11) des Meßzylindermantels (6) auf die Schließzeit des Absperrventils (5) abgestimmt ist.

8. Prüfeinrichtung nach Anspruch 7, dadurch gekennzeichnet, daß das Absperrventil (5) als Schnellschlußventil ausgebildet ist.

**Claims**

1. Test apparatus for a flow meter (1) fixedly installed in a pipe duct (2), particularly for higher fluid pressure, wherein a cylindrical calibrating container (4), installed in a by-pass pipe (3) of the pipe duct and optionally connectible by means of a valve mechanism (5) into the pipe duct (2) in series with the flow meter (1), carries start and stop switches (33, 36) respectively at the beginning and end of a mensuration path (10) whereby the summation of electrical pulses of the flow meter (1) is started and stopped again during the moving-past of a mensuraion piston (7) sliding within the calibrating container (4) and displaced by the fluid which is to be measured, in which connection a relationship is established between the summated pulses and the calibration volume of the mensuration path (10), characterised in that

(a) the valve mechaism comprises only a shut-off valve (5) installed in the pipe duct (2) between two connectors (16, 18) of the by-pass pipe (3),

(b) the calibrating container (4) carries within it a mensuration cylinder jacket (6) forming the mensuration path (10) as well as delimiting an external pressure balancing volume (14), comprising start and stop switches (33, 36) and a mensuration piston sliding therein.

(c) the calibrating container (4) and the mensuration cylinder jacket (6) are installed in the by-pass pipe (3) vertically and with an inlet extremity (20) situated at the bottom, and

(d) the return of the mensuration piston (7) to the initial position when the shut-off valve is opened (5) occurs automatically through the intrinsic weight of the mensuration piston and/or through a differential pressure system (30).

2. Test apparatus according to claim 1, characterised in that the mensuration cylinder jacket (6) is held concentrically in the calibrating container (4) at its inlet extremity (20) and outlet extremity (27) and is scaled off at the inlet extremity from the pressure compensation space (14), whereas the mensuration chamber jacket (6) opens freely in the area of its outlet extremity into the pressure compensation space (14) from which branches off the outlet section (17) of the by-pass pipe (3).

3. Test apparatus according to claims 1 and 2, characterised in that the mensuration cylinder jacket comprises a mensuration path situated between start and stop switches, as well as a start section and a follow-on section, and that the mensuration cylinder jacket (6) comprises jacket apertures (22) in the area of the follow-on section (12).

4. Test apparatus according to one or more of claims 1 to 3, characterised in that the outlet extremity (27) of the mensuration cylinder jacket (6) is provided with an inwardly projecting stroke limitation rim (28).

5. Test apparatus according to one or more of claims 1 to 4, characterised in that the calibrating container lid (23) carries a damping spring (29) for the mensuration piston (7).

6. Test apparatus according to one or more of claims 1 to 5, characterised in that the pipe duct (2) is provided with a Venturi-pipe-like constriction (30) forming the pressure differential system in the connecting section (16) of the inlet section (15) of the by-pass pipe (3).

7. Test apparatus according to one or more of claims 1 to 6, characterised in that the length of the start section (11) of the mensuration cylinder jacket (6) is matched to the closing period of the shut-off valve (5).

8. Test apparatus according to claim 7, characterised in that the shut-off valve (5) is constructed as a rapid closure valve.

## Revendications

1. Dispositif de test pour un débitmètre (1) incorporé à demeure dans une conduite tubulaire (2), notamment pour des pressions élevées de fluide, dispositif dans lequel un récipient d'étalonnage cylindrique (4) incorporé dans une conduite (3) montée en dérivation sur la conduite tubulaire et apte, au moyen d'un dispositif à vanne (5), à être sélectivement branché dans la conduite tubulaire (2) en série avec le débitmètre (1), porte, au commencement et à la fin d'une section de jaugeage (10), un contacteur de mise en service et respectivement un contacteur d'arrêt (33, 36), par lesquels l'addition d'impulsions électriques dans le débitmètre (1) est déclenchée et à nouveau stoppée lors du passage devant ces contacteurs d'un piston de jaugeage (7) coulissant dans le récipient d'étalonnage (4) et repoussé par le fluide à jauger, le nombre des impulsions additionnées se trouvant ainsi être en rapport avec le volume d'étalonnage de la section de jaugeage, caractérisé en ce que:

a) le dispositif à vanne se compose uniquement d'une vanne d'arrêt (5) insérée dans la conduite tubulaire (2) entre deux raccords (16, 18) de la conduite de dérivation (3),

b) le récipient d'étalonnage (4) porte intérieurement une chemise cylindrique de jaugeage (6) qui définit la section de jaugeage (10) tout en délimitant une chambre extérieure de compensation de pression (14) et comporte le contacteur de mise en service et le contacteur d'arrêt (33, 36) ainsi que le piston de jaugeage (7) coulissent à l'intérieur de la chemise,

c) le récipient d'étalonnage (4) et la chemise cylindrique de jaugeage (6) sont intégrés en position verticale dans la conduite de dérivation (3), par une extrémité d'admission (20) située en position basse, et

d) le mouvement de retour du piston de jaugeage (7) vers sa position initiale s'effectue automatiquement, lorsque la vanne d'arrêt (5) est ouverte, sous l'effet du propre poids du piston de jaugeage et/ou sous l'action d'un dispositif générateur d'une pression différentielle.

2. Dispositif de test selon la revendication 1, caractérisé en ce que la chemise cylindrique de jaugeage (6) est, au niveau de son extrémité d'admission (20) et de son extrémité de refoulement (27), maintenue en position concentrique dans le récipient d'étalonnage (4) et est, à hauteur de son extrémité d'admission, isolée de façon étanche vis-à-vis de la chambre de compensation de pression (14), tandis que la chemise de la chambre de jaugeage (6) débouche librement, au voisinage de son extrémité de refoulement, dans la chambre de compensation de pression, (14) de laquelle part le tronçon de refoulement (17) du conduit de dérivation (3).

3. Dispositif de test selon les revendications 1 et 2, caractérisé en ce que la chemise cylindrique de jaugeage se compose d'une section de mesure s'étendant entre le contacteur de mise en service et le contacteur d'arrêt ainsi que d'une section de lancement et d'une section de dépassement de course et en ce que la chemise cylindrique de jaugeage (6) comporte des ouvertures latérales (22) au voisinage de la section de dépassement de course (12).

4. Dispositif de test selon une ou plusieurs des revendications 1 à 3, caractérisé en ce que l'extrémité de refoulement (27) de la chemise cylindrique de jaugeage (6) est munie d'un rebord limiteur de course (28) saillant vers l'intérieur.

5. Dispositif de test selon une ou plusieurs des revendications 1 à 4, caractérisé en ce que le couvercle (23) du récipient d'étalonnage porte un ressort d'amortissement (29) pour le piston de jaugeage (7).

6. Dispositif de test selon une ou plusieurs des revendications 1 à 5, caractérisé en ce que la conduite tubulaire (2) est pourvue, dans la zone de raccordement (16) du tronçon d'admission (15) de la conduite de dérivation (3), d'un étranglement (30) en forme de tube de Venturi qui constitue le dispositif générateur de pression différentielle.

7. Dispositif de test selon une ou plusieurs des revendications 1 à 6, caractérisé en ce que la longueur de la section de lancement (11) de la chemise cylindrique de jaugeage (6) est adaptée en fonction du temps de fermeture de la vanne d'arrêt (5).

8. Dispositif de test selon la revendication 7, caractérisé en ce que la vanne d'arrêt (5) est constituée par une vanne à fermeture rapide.

0 109 570